# EUROPEAN PATENT APPLICATION

(11) **EP 1 076 445 A2**
(43) Date of publication of application: **14.02.2001**
(21) Application number: 00830577.3
(22) Date of filing: 11.08.2000
(51) Int. Cl.: H04M 3/42, H04M 3/493, H04M 7/00, H04N 7/14

(54) **Apparatus for selecting and utilizing added value services provided on a fixed and/or mobile telephone network by a service center on a normal television set.**

(30) Priority: 13.08.1999 IT RM990522
(71) Applicant: Si2Si S.p.A., 00156 Roma (IT)
(72) Inventor: Durand de la Penne, Luigi, 00135 Roma (IT); Valenti, Luigi, 00192 Roma (IT); Zanazzo, Ettore, 18100 Imperia (IT)
(74) Representative: Sarpi, Maurizio

(57) **Abstract**

A user apparatus, to be connected to a normal television set and to a fixed or mobile telephone line enabled to make calls, is made up of three operating units, fit for automatically connecting themselves with an Added Value Service Center, for exchanging information with such a Center, for displaying such information on the television set of the user and for allowing the user to select further information or to carry out the selections, and/or inputting data, for purchasing and/or selling products and services.

## Description

### DISCLOSURE OF THE INVENTION

The present invention relates to the field of the supply of added value services aimed at facilitating the proposal of offers and the marketing of products and/or services.

More particularly, the finding relates to an apparatus made up of the assembly of three operating units, respectively fit for the data and/or voice connection and dialog with a Service Center (which is integral portion of the system together with the apparatus under examination) through a telephone call on a fixed or mobile telephone network, for displaying the data received from the Service Center or locally provided by the user on the user's television set and finally for immediately inputting and displaying the selections of the user himself in relation with the offers, the marketing of products and services, the acquisition of information on products and services.

The apparatus according to the finding can be utilized with any television set and with any telephone line, in a home or work context, of a fixed or a mobile network.

The popularity is well known of the so called "network of the networks", i.e. Internet, about the availability of numberless offers relevant to products and services of various nature.

On the other side, the existence is known of products that, in connection with the television set on a side, and with the telephone line on the other side, allow the user to "navigate" on Internet by utilizing the television set.

Such products potentially have the undoubted advantage of approaching a public surely broader than that denoted by the owners of Personal Computers to Internet, in that the required skill level is lower than that necessary for the use of a Personal Computer.

It is equally true, however, that such products, which make use of the television set as an instrument for displaying the contents of Internet, anyhow have a high complexity level and sale price. Their price, in fact, is only slightly lesser than that of a low level Personal Computer, and this is due to the lack of attaining the so called "critical mass" of the demand and consequently high quantity of industrial production which involves the pulling down of the costs at the source, i.e. just at the production, with the lack of the decrease of the sale price to the public.

On the other part, the access to Internet too still remains the prerogative of an absolutely restricted percentage of people, having a knowledge level of the Personal Computer "instrument" which surely does not fall within the average of population.

Also in the case of Personal Computers, thus, there are apparent barriers to the diffusion of Added Value Services, consisting in the still high sale price of Personal Computers themselves and in the informatic skill level required to their users.

In view of all of what has been said, the object of the finding is to provide the home or work user with an apparatus, having a low cost and that can be easily utilized, for utilizing Added Value Services in communication, and cooperating with a Service Center through a fixed or mobile telephone network and, by means of the latter, on Internet too.

In other words the invention consists in a user apparatus substantially including three operating units, fit for automatically connecting itself with the Added Value Service Center, for exchanging information with such a Center, for displaying such information on the television set of the user and for allowing the user to select further information or to carry out the selections, and/or inputting data, for purchasing and/or selling products and services.

More particularly, this has been achieved by providing an apparatus wherein:
- a first operating unit is fit for being connected with the fixed or mobile telephone network, with the task of establishing, maintaining and automatically interrupting the connection with the Added Value Service Center and of exchanging coded and encrypted information on the latter;
- a second operating unit is fit for being connected with the television set of the user, with the object of displaying information coming from the Service Center through the operating unit connected with the telephone line;
- a third unit is fit for being utilized by the user as an instrument for selecting information (offers of products and services) displayed on the television set and exchanged in the dialog with the Added Value Service Center.

According to a peculiar feature of the invention, the first two operating units can be physically separated or included in a single device preferably arranged near the television set. In this connection, for instance, it is useful to adscertain that in case a radimobile type telephone line (such as GSM, TACS or other) is utilized, the first operating unit does not necessarily have to be arranged near a fixed telephon socket, which is often far from the television set, and therefore can be advantageously realized integrally with the second operating unit arranged near the television set, so that the apparatus can be substantially made up of only two distinct objects; the third operating unit used by the user and the other two incorporated and arranged near the television set.

A better comprehension of the finding will be had with the following detailed disclosure and with reference to the annexed figures that illustrate, only as a matter of example and not of restriction, a preferred embodiment that relates to the most usual case at the present day, wherein one utilizes a television set and a fixed telephone line, usually far from the television set itself, whereto a telephone set is usually connected, which is normally used to make and receive telephone calls.

Therefore, in this case it is preferable that the three operating units are actually made up of three distinct and separate devices.

In the drawings:
Figure 1 shows, according to the invention, the connections between the three operating units constituting the apparatus and between the latter and the outer world;
Figure 2 is a block diagram of the first operating unit according to the finding (device DTEL), to be connected to the telephone line;
Figure 3 is a block diagram of the operating unit according to the finding (device DTV), to be connected to the user's television set;
Figure 4 is a block diagram of the third operating unit according to the finding (device DCO), which allozs the user to carry out his/her selections;
Figures 5 and 6 represent block diagrams of the operation of the finding.

### BRIEF SUMMARY OF THE INVENTION

With reference to the figures, to utilize the added value services of displaying of information and marketing of products and services, the user has to be in possession of the apparatus which is disclosed herein, of a normal television set, of a normal telephone line enabled to make calls and eventually, but not necessarily, of a normal telephone set to be connected to the finding and with which to telephone, as is usual, when the apparatus is not in operation.

Substantially, the user after becoming in possession of apparatus 1 or has anyhow the availability thereof, simply has to carry out the connections with the telephone line and with the television set and, by acting upon the third device, operates the connection with the Added Value Service Center that, after acquiring the data identifying the user and the apparatus, provides for registering the new user and for sending, again through the telephone connection, information that has to be displayed on the television set.

According to the present invention, the three operating units or devices communicate between them preferably, but not exclusively, without wires; for instance at a radio frequency, by waves conveyed through the main electric network; by infrared rays, or in a mixed mode, for instance by infrared rays between the third operating unit DCO used by the user and the second operating unit DTV connected with the television set, and through radio frequency or waves conveyed between the latter and the first operating unit DTEL connected with the telephone line.

In the illustrated not limiting example, the three operating units are made up of three devices that communicate between them at radio frequency.

Device DTEL, after acquiring information, provides for transmitting it to television set device DTV, which displays it in the suitable format on the user's television set.

The user, looking at the information displayed on the television set, is able to act on the remote control device DCO to carry out the selections for displaying new information that, dependently on the type, can coincide with activities for the marketing of products and services.

The remote control device DCO sends every new selection of the user to the television set device DTV, by exploiting a communication on a radio frequency channel or by infrared rays.

Every new selection of the user, input by the latter on the remote control device DCO and sent to the television set one DTV, is thereafter communicated to the telephone device DTEL which transmits it on the telephone line (which in this example embodiment is fixed) at the Added Value Service Center which, dependently on the type of selection and/or user data, retransmits new information to the apparatus and/or it undertakes itself new communications with outer entities such as, for instance, other Added Value Service Centers.

It is apparent that the user, by carrying out the selection operations by means of the remote control device DCO, has the advantage of selecting information, products and services by utilizing only one instrument, the television set, which is now of an everyday use. Moreover, the remote control device DCO being as simple as the remote controller of a television set, the user is allowed to access, exploit and eventually coming in possession of new products and services offered by the Added Value Service Center, eventually comfortably seated and without having any knowledge or experience of a technical type on Personal Computers or the like.

In the case in which the telephone line used for the connection between apparatus 1 and the Service Center is of a fixed and not of a radio mobile type, it is suitable to provide an explanation about the types of the connection that take place between apparatus 1 and the Service Center and it is made to be remarked that telephone device DTEL, upon a command of the user, but completely transparent therefor, carries out the connection with the Added Value Service Center in a direct mode, by calling the Service Center itself, or in an indirect mode, by calling a Presence Point (an integral portion of the Service provided through apparatus 1 and the Service Center), better known with English term "Point of Presence" (acronym POP), for the access to Internet network and, through such POP and Internet network, taking possession of the Added Value Service Center.

In the case of a direct connection, the telephone device DTEL makes a call, which could also be of an interurban, trunk call type, having the Service Center as its destination; in case of an indirect connection, telephone device DTEL makes a call in any case, which is of a urban type, having the Service Center as its end destination.

The type of the connection between apparatus 1 and the Added Value Service Center is generally indirect and only in particular cases, such as for instance the unavailability of the urban access POP, can be direct.

It derives therefrom that the user has an evident advantage, which stems from the communications of indirect type, and which consists in a telephone charge, associated with the utilization of the service under examination, which is generally of a urban type.

### DISCLOSURE

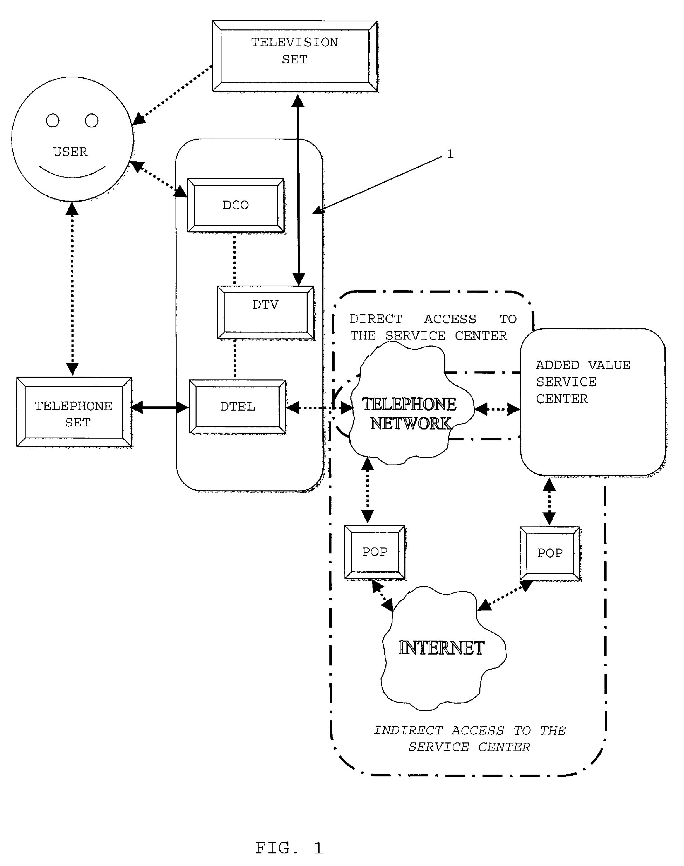

With particular reference to the embodiment of this invention outlined only as a matter of not limiting example in Figure 1, apparatus 1 is made up of three operating units which, in the specific embodiment, coincide with as many electronic, preferably integrated and printed circuit, devices DCO, DTEL, DTV, which are better disclosed hereinafter.

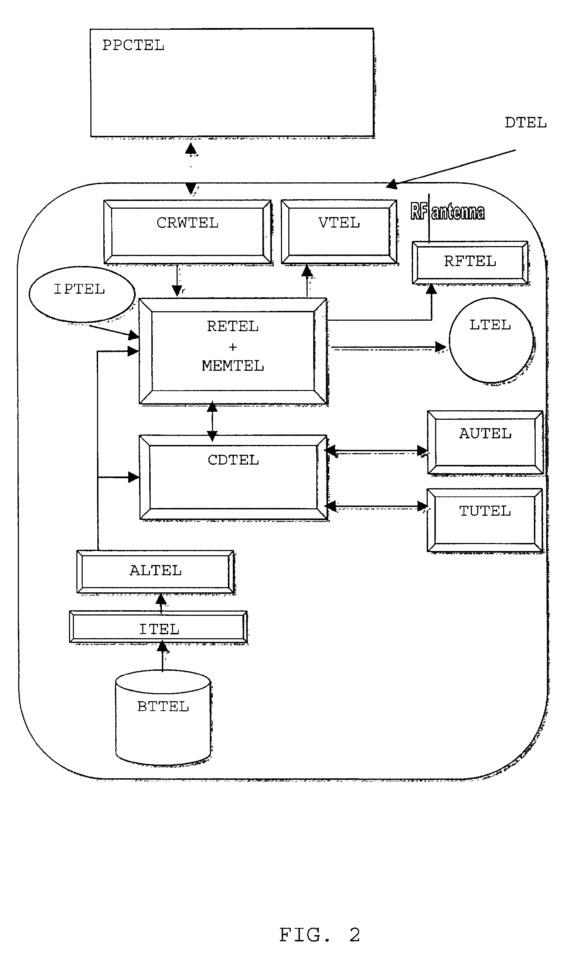

With reference to Figure 2, telephone device DTEL includes a button IPTEL for switching on or switching off the voice telephony functionality on Internet, a multicolor LED LTEL for signaling the operation state of the device under examination, a power supply ALTEL and optionally a battery BTTEL for the power supply of the device, a display VTEL, an interface-command-control-processing RETEL and store system MEMTEL which, when the user gives the order of access to the Service Center by acting upon device DCO, receives such an order through transceiver RFTEL which decodes the radio frequency signal, interacts with the connection of the user telephone set AUTEL, with the connection with telephone line TUTEL and with optional service-credit-debit card PPCTEL, by means of optional reader/writer CRWTEL, sending the call selection towards the POP and, once the connection has been established, makes the logical connection with the Added Value Service Center.

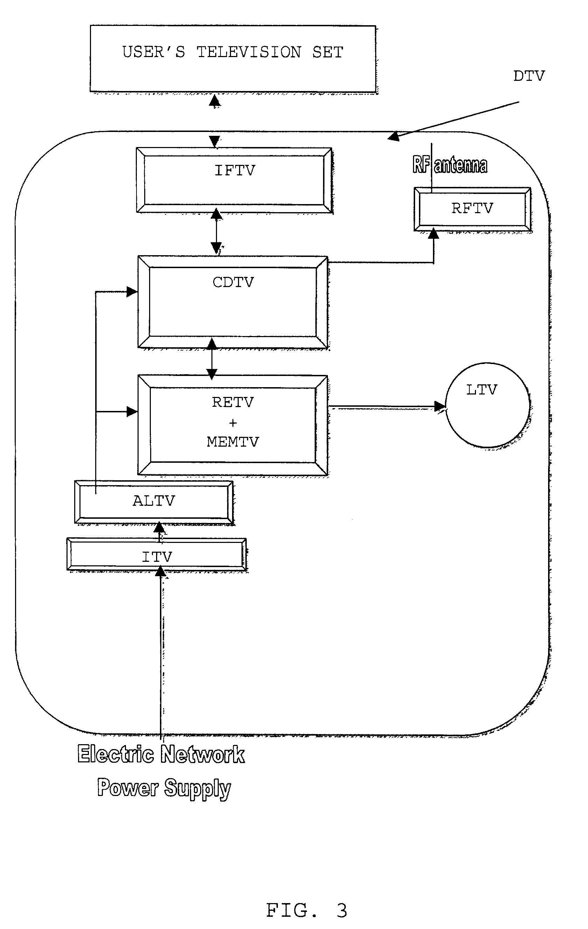

With reference to Figure 3, television set device DTV includes a switch ITV for turning on or turning off, a multicolor LED LTV for signaling the state of the operation of the device, a power supply ALTV for the power supply of the device, an interface-command-control-processing system RETV, a subsystem IFTV for interfacing with the television set and CDTV for coding information in television format and, finally, a radio frequency receiver RFTV which, under the direct control of processor RETV, acquires information on radio frequency channel from telephone device DTEL and displays it on the television set through encoder CDTV and interface IFTV.

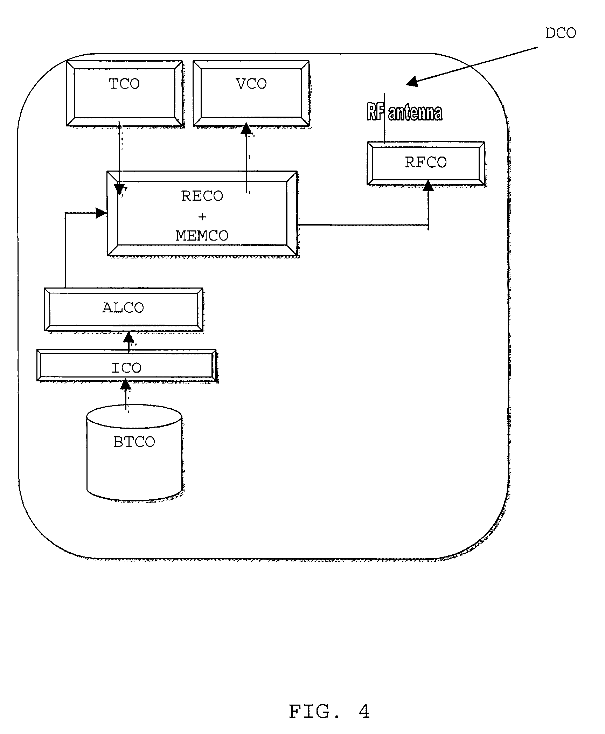

With reference to Figure 4, the remote control device DCO includes a series of keys TCO, of an alphabetic-digital-function type, a display VCO, an interfacing-command-control-processing system RECO which, by interacting with the user through keys TCO and display VCO, acquires the selections of the user, relevant to the information displayed on the television set through device DTV, sends it to telephone set device DTEL through transceiver RFCO on radio frequency channel. Remote control device DCO is supplied through a battery BTCO and a power supply ALCO, which can be turned on by a switch ICO for turning on or turning off, the presence whereof is optional.

All the functions supplied by apparatus 1 are carried out only if the switches for turning on or turning off devices DTEL, DTV, DCO are in turned-on position, if device DTEL is correctly connected with user's telephone line through interface TUTEL, if the user is enabled to the use of a telephone line for accessing the telephone network. On the other side, a correct connection of device DTV with the thelevision set is a prerequisite for the utilization of the functions.

At this point, it is interesting to analyze the modalities of the interactions between the User, apparatus 1 and the Added Value Service Center.

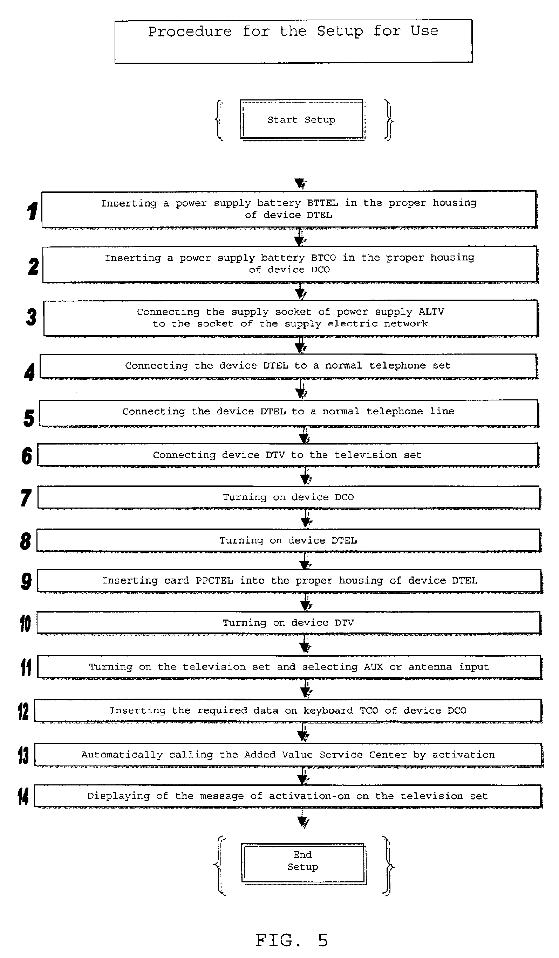

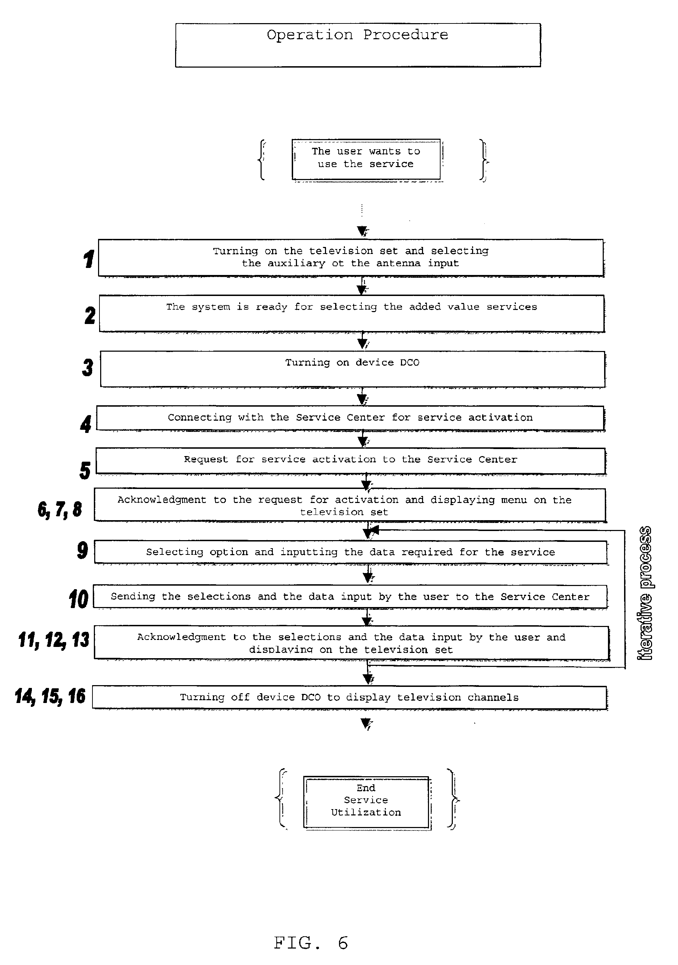

The block diagrams of Figures 5 and 6 illustrate the logic of the operation of the system in a detailed way, and put the series into evidence of simple operations which, in the illustrated case, have to be performed by the user respectively for: the Procedure for the Setup for use (Figure 5) and the one for the Operation (Figure 6).

### PROCEDURE FOR THE SETUP FOR USE

To setup for the use of apparatus 1, and the three devices constituting it, the user has:
1. to insert a supply battery BTTEL in the proper housing of device DTEL;
2. to insert a supply battery BTCO in the proper housing of device DCO;
3. to connect the supply socket of power supply ALTV to the socket of the main electric network;
4. to connect device DTEL to a normal telephone set through interface AUTEL;
5. to connect device DTEL to a normal telephone line enabled to make calls, through interface TUTEL;
6. to connect device DTV to the television set, through interface IFTV, on the auxiliary (AUX) or antenna input;
7. to actuate switch ICO to turn on device DCO, verifying that the message of "welcome" appears on display VCO, this being the fact that puts the operation state of the device into evidence;
8. to actuate switch ITEL to turn device DTEL on verifying that LED LTEL lights up, with orange color, that puts the preoperation state into evidence;
9. to insert service-credit-debit card PPCTEL, where provided, in the proper housing CRWTEL of device DTEL, verifying that LED LTEL lights up, with green color, that puts the operation state into evidence;
10.to actuate switch ITV to turn on device DTV verifying that LED LTV lights up, with orange color, that puts the preoperation state into evidence;
11. to turn the television set on and to select, through the remote controller of the television set, auxiliary (AUX) or antenna input whereon device DTV has been connected through interface IFTV;
12. by acting on keyboard TCO, of device DCO, to insert the required data displayed on the television set; the information required by the apparatus and displayed on the television set, once input by the user, are necessary for the actuation by the user himself within the context of the data base of the Added Value Service Center and therefore for the correct utilization of the services;
13. the correct input of the data required by apparatus 1 and displayed on the television set of the user, causes the automatic making of a call of indirect type towards the Added Value Service Center, with the object of "activating" the user to the utilization of the services. It is to be remarked that apparatus 1 sends both the information input by the user and that present in service card PPCTEL to the Service Center;
14. to wait the displaying, on the television set, of the message of "activation settled" for the service;
15. to check that LED LTV of device DTV becomes of green color, a fact that puts the operation state into evidence.

After carrying out these simple operations, apparatus 1 is ready for being utilized by the user.

The operation procedure of apparatus 1 is as follows:

### OPERATION PROCEDURE

1) the user turns on the television set and selects the auxiliary (AUX) or antenna input whereon device DTV has been connected; the selection is carried out through the remote controller of the television set;
2) the user sees that on the television set the message is present of "ready to the service selection" displayed by device DTV;
3) the user turns on device DCO through a switch ICO set in the turned on position and waits for the displaying of the welcome message;
4) the user activates the connection with the Added Value Service Center, by acting upon keyboard TCO of device DCO, by selecting the function of "service activation" present in the menu displayed on the television set;
5) the selection of the "service activation" function made by acting upon keyboard TCO of device DCO results in the transmission, on a radio frequency channel managed by transceiver RFCO of the device itself, towards transceiver RFTEL of device DTEL which, after receiving the command and processing it through processor RETEL, provides for sending to the latter the series of pieces of information among which the user can select;
6) the Added Value Service Center, after receiving the request for accessing the service by user's apparatus 1, provides for sending to the latter the series of pieces of information among which the user can select;
7) the information sent by the Service Center, through a telephone line, and received by device DTEL through an interface TUTEL, decoded through a decoder CDTEL and processed through a processor RETEL, are then sent to radio frequency receiver RFTV of device DTV, through radio frequency transceiver RFTEL of device DTEL;
8) the information so received through a radio frequency receiver RFTV of device DTV, processed by its processor RETV, are displayed on the television set after encoding by encoder CDTV and conversion in the proper television signals, by television interface IFTV of device DTV itself;
9) the user, looking at the information so displayed on the television set by device DTV provides for selecting the suggested options, to input the eventual required data, all by acting upon keyboard TCO of device DCO;
10) in a way analogous to the preceding stages, device DCO sends to device DTEL, through a radio frequency transceiver RFCO, the selections and data input by the user;
11) device DTEL, after receiving the data from device DCO, through radio frequency receiver RFETL, retransmits them to the Service Center by encoder CDTEL and interface TUTEL;
12) the Service Center, after receiving the data from apparatus 1, gives a proper acknowledgment of them through a further transmission on a telephone line and registers the user's selections/data in its own data base, so carrying out the generic "Added Value Service";
13) the acknowledgment of the taking place of the activation of the generic Added Value Service is so received by device DTEL and sent therefrom, on a radio frequency channel, on a radio frequency channel, on device DTV that provides for displaying it on the television set;
14) the user turns off device DCO, by switch ICO;
15) the user, by acting upon the remote controller if his/her own television set, switches the displaying on the normal television channels;
16) the generic Added Value Service so has been activated-selected and the user has taken advantage of it immediately, in case for instance of share stock marketing services, or he/she will take advantage at the arrival of the material purchased through apparatus 1 in the case of goods, products, physical services.

In conclusion of the disclosure, it is to to remarked that all the information exchanged between devices DTEL, DTV, DCO and the Added Value Service Center, are of an encoded and enciphered type to obviate eventual problems of intrusions/decodings and unproper use of apparatus 1 and of offered added value services.

Among the pieces of information exchanged between apparatus 1 and the Service Center one identifies as a matter of example:
a) the identification code of apparatus 1 within the context of all the managed ones;
b) the identification code of service card PPCTEL;
c) the enciphering codes (enciphering key) of the pices of information exchanged between apparatus 1 and the Added Value Service Center;
d) the information relevant to added value services such as: the type of the service, the conditions of utilization, the duration of the service, the nature of the good, the price, etc.;
e) a series of static or variable data associated with the management of the user, of his/her accesses to the service, etc.

Obviously it is possible to modify the contents and/or the quantity of the data exchanged between apparatus 1 and the Added Value Service Center, also through the Point of Presence POP, without changing the operation of the invention.

At this point, and for what mentioned above, it turns out to be apparent that the same operation scheme is applied without variations also to the case wherein the operating units communicate with each other by using systems alternative to radio frequency, such as for instance conveyed waves, infrared rays or by cable.

In particular, it is interesting to remark that in the case wherein one utilizes the radio mobile telephone network for the connection to apparatus 1 to the Service Center, be it by Internet or not, the first operating unit DTEL intended to the telephone connection, can be physically incorporated into the second operating unit DTV, for the connection to the television set, further simplifying the use of the finding by the user, who from the operating standpoint will only have to use two devices: remote controller DCO and a device connected with the television set, which really anyhow performs the functions corresponding with the first two operating units DTEL and DTV.

In this case, the "dual-function" device arranged near the television set could contain a cellular apparatus, or a housing for a GSM card, or it could be endowed with a housing for a pocket telephone, be it GSM, TACS or of another type, but still radio mobile, which in this case would remain advantageously available for the user in the periods not of utilization of the finding itself.

The setup procedures described above, therefore, in the latter case would be simplified in that the first device or operating unit DTEL would be incorporated to the second one and thus it would not be necessary to make any connection between the two, but only to insert the GSM card or the pocket telephone in case it is not already prearranged in apparatus 1 itself.

Still according to the finding, operating unit DTEL that manages the connection with the telephone line automatically makes the selection of the cheapest fixed and/or mobile telephony manager based on the called number, the time band and the day, optimising the telephone costs based on information stored by the user or directly by the service center.

The present invention has been disclosed and illustrated in a preferred embodiment thereof and in some of variants thereof, but it is understood that anyone skilled in the art will be able to make equivalent modifications and/or substitutions, still without coming out of the protection scope of the present industrial sole right.

## Claims

1. An apparatus (1) for selecting and utilizing added value services provided by a Service Center on a normal television set through the fixed or mobile telephone network, characterized in that it comprises an assembly of three operating units (DTEL, DTV, DCO), respectively fit for the data and/or voice connection and dialog with an Added Value Service Center through a telephone call on a fixed or mobile telephone network, for the displaying on the user's television set of the data received from the Service Center e/or locally provided by the user and finally for the immediate inputting and displaying of the selections of the user himself/herself in relation with the offers, the marketing of products and services, and the acquisition of information on products and services.

2. An apparatus (1) as in the preceding claim characterized in that:
- the first one of said three operating units (DTEL) is fit for being connected to a fixed or mobile telephone line enabled to make calls, with the task of establishing, maintaining and automatically interrupting the telephone connection with the Added Value Service Center and exchanging encoded and encrypted information with the latter,
- the second operating unit (DTV) is fit for being connected to the user's television set, with the object of displaying the information received from the Service Center through the first operating unit (DTEL) connected with the telephone line,
- the third operating unit (DCO) is fit for being utilized by the user as an instrument for the selection of information (offers of products and services) that are displayed on the television set and exchanged in the dialog with the Added Value Service Center.

3. An apparatus (1) as in the preceding claims characterized in that the first operating unit device (DTEL) is endowed with a housing-reader of service-credit-debit card.

4. An apparatus (1) as in the preceding claims characterized in that the three operating units (DTEL, DCO and DTV) are endowed with means of a type known for being connected with each other at a radiofrequency and/or through infrared rays and/or through conveyed waves and/or by cable.

5. An apparatus (1) as in the preceding claims characterized in that the first operating unit (DTEL) sends the information acquired from the Service Center to the television set device (DTV) which displays them, in the suitable format, on the television set of the user.

6. An apparatus (1) as in the preceding claims characterized in that the third operating unit or remote controller (DCO) sends any new selection of the user to the second operating unit connected with the television set (DTV), by exploiting a communication on a radio frequency channel or through infrared rays.

7. An apparatus (1) as in the preceding claims characterized in that any new selection of the user, input by the latter into the third operating unit or remote controller (DCO) and sent to the second displaying operating unit (DTV) in the television set, is communicated from the latter to the first operating unit (DTEL) that retansmits it by fixed or mobile telephonic way to the Added Value Service Center which, dependently on the type of the selection and/or user data, retransmits new information to the apparatus and/or it undertakes itself new communications with outer entities such as other Added Value Service Centers.

8. An apparatus (1) as in the preceding claims characterized in that the first operating unit is made up of a telephone device (DTEL) that includes a button (IPTEL) for switching on or switching off the functionalities of voice telephony on Internet, a multicolor LED (LTEL) for signaling the state of operation of the device under examination, a power supply (ALTEL), a display (VTEL), an interface-command-control-processing (RETEL) and store system (MEMTEL) that, when the user gives the order of accessing the Service Center by acting upon the device (DCO), it receives such an order through the transceiver (RFTEL) that decodes the radio frequency signal, interacts with the connection of the user'' telephone set (AUTEL), with the connection with the telephone line (TUTEL) and with the service-credit-debit card (PPCTEL), by means of the reader/writer (CRWTEL), sending the selection of the call towards the POP and, after the connection has been established, makes the logic connection with the Added Value Service Center.

9. An apparatus (1) as in the preceding claim, characterized in that said first operating unit (DTEL) includes a supply battery (BTTEL).

10. An apparatus as in claims from 8 on characterized in that the second operating unit is made up of a television set device (DTV) that includes a switch (ITV) for turning on or turning off, a multicolor LED (LTV) for signaling the operating state of the device, a power supply (ALTV) for supplying the device, an interface-command-control-processing system (RETV), a subsystem for the interfacing (IFTV) towards the television set and encoding (CDTV) information in a television format and finally a radio frequency receiver (RFTV) which, under the direct control of the processor (RETV), acquires the information on a radio frequency channel from the telephone device (DTEL) and displays them on the television set through the encoder (CDTV) and the interface (IFTV).

11. An apparatus (1) as in claims from 8 on characterized in that the third operating unit is made up of a remote control device (DCO) that includes a series of keys (TCO), of an alphabetic-digital-function type, a display (VCO), an interface-command-control-processing system (RECO) that, by interacting with the user through keys (TCO) and the display (VCO), acquires the user selections, relevant to the information displayed on the television set through the device (DTV), and sends them to the television set device (DTV) through a transceiver (RFCO) on a radio frequency channel.

12. An apparatus (1) as in the preceding claims characterized in that the thirdf operating unit (DCO) is supplied through a battery (BTCO) and a power supply).

13. An apparatus (1) as in the preceding claim, characterized in that said battery (BTCO) and said power supply (ALCO) can be activated by means of a switch (ICO) for turning on or turning off.

14. An apparatus (1) as in the preceding claims characterized in that all the functions performed by the same apparatus (1) are carried out only if the switches for the turning on or the turning off of the three operating units or devices (DTEL, DTV, DCO) are in the turned on position, if the device (DTEL) is correctly connected with the fixed or mobile telephone line of the user through the interface (TUTEL), if the user is enabled to the use of a telephone line for accessing the telephone network itself.

15. An apparatus (1) as in the preceding claims characterized in that the correct connection of the second operating unit or television set device (DTV) to the user's television set is the prerequisite for the utilization of the functions.

16. An apparatus (1) as in the preceding claims characterized in that in a completely transparent mode for the user, the first operating unit or telephone set device (DTEL) makes a connection with the Added Value Service Center in a direct mode, by calling the Service Center itself, or in an indirect mode, by calling a Presence Point (an integral portion of the service provided through the apparatus itself and the Service Center), better known with English term Point of Presence (acronym POP), for accessing Internet network and, through such POP and Internet network, by coming into communication with the Added Value Service Center.

17. An apparatus (1) as in the preceding claim characterized in that, in case of direct connection through fixed network, the telephone device (DTEL) makes a telephone call, having the Service Center as its destination, which is of a urban or of a trunk type; in the case of an indirect connection through a fixed network, the telephone device (DTEL) by making anyhow a call, having the Service Center as its end destination and the POP as its intermediate destination, which is of urban type.

18. An apparatus (1) as in claims 16 or 17 characterized in that the type of the connection between the apparatus itself and the Added Value Service center is generally indirect and only in particular cases, such as for instance the unavailability of the POP of urban access, can be direct.

19. An apparatus (1) as in the preceding claims characterized in that it provides the following procedure for the setup for the use by the user:
A. to insert a supply battery (BTTEL) in the proper housing of the device (DTEL);
B. to insert a supply battery (BTCO) in the proper housing of the device (DCO);
C. to connect the supply socket of the power supply (ALTV) to the socket of the main electric network;
D. to connect the device (DTEL) to a normal telephone set through the interface (AUTEL) ;
E. to connect the device (DTEL) to a normal telephone line enabled to make calls, through the interface (TUTEL);
F. to connect the device (DTV) to the television set, through the interface (IFTV), on the auxiliary (AUX) or antenna input;
G. to actuate the switch (ICO) to turn on the device (DCO), verifying that the message of "welcome" appears on the display (VCO), this being the fact that puts the operation state of the device into evidence;
H. to actuate switch ITEL to turn on the device (DTEL) verifying that the LED (LTEL) lights up, with orange color, that puts the preoperation state into evidence;
I. to insert service-credit-debit card PPCTEL, in the proper housing (CRWTEL) of the device (DTEL), verifying that the LED (LTEL) lights up, with green color, that puts the operation state into evidence;
J. to actuate the switch (ITV) to turn on the device (DTV) verifying that the LED (LTV) lights up, with orange color, that puts the preoperation state into evidence;
K. to turn on the television set and to select, through the remote controller of the television set, the auxiliary (AUX) or antenna input whereon the device (DTV) has been connected through interface (IFTV);
L. by acting on the keyboard (TCO), to insert the required data displayed on the television set; the information required by the apparatus and displayed on the television set, once input by the user, are necessary for the actuation by the user himself within the context of the data base of the Added Value Service Center and therefore for the correct utilization of the services;
M. the correct input of the data required by the apparatus (1) and displayed on the television set of the user, causes the automatic making of a call of indirect type towards the Added Value Service Center, with the object of "activating" the user to the utilization of the services; the information sent to the Service Center from the apparatus (1) being both the information input by the user and that present in service card PPCTEL;
N. to wait the displaying, on the television set, of the message of "activation settled" for the service;
O. to check that the LED (LTV) of the device (DTV) becomes of green color, a fact that puts the operation state into evidence.

20. An apparatus (1) as in the preceding claims characterized in that its operation procedure is the following one:
a) the user turns on the television set and selects the auxiliary (AUX) or antenna input whereon the device (DTV) has been connected; the selection is carried out through the remote controller of the television set;
b) the user sees that on the television set the message is present of "ready to the service selection" displayed by the device (DTV);
c) the user turns on the device (DCO) through a switch (ICO) set in the turned on position and waits for the displaying of the welcome message;
d) the user activates the connection with the Added Value Service Center, by acting upon the keyboard (TCO) of the device (DCO), by selecting the function of "service activation" present in the menu displayed on the television set;
e) the selection of the "service activation" function made by acting upon the keyboard (TCO) of the device (DCO) results in the transmission, on a radio frequency channel managed by the transceiver (RFCO) of the device itself, towards the transceiver (RFTEL) of the device (DTEL) which, after receiving the command and processing it through a processor (RETEL), provides for sending to the latter the series of pieces of information among which the user can select;
f) the Added Value Service Center, after receiving the request for accessing the service by the user's apparatus (1), provides for sending to the latter the series of pieces of information among which the user can select;
g) the information sent by the Service Center, through a telephone line, and received by the device (DTEL) through an interface (TUTEL), decoded through a decoder (CDTEL) and processed through a processor (RETEL), are then sent to the radio frequency receiver (RFTV) of the device (DTV), through the radio frequency transceiver (RFTEL) of the device (DTEL);
h) the information so received through a radio frequency receiver (RFTV) of the device (DTV), processed by its processor (RETV), are displayed on the television set after encoding by the encoder (CDTV) and conversion in the proper television signals, by the television interface (IFTV) of the device (DTV) itself;
i) the user, looking at the information so displayed on the television set by the device (DTV) provides for selecting the suggested options, to input the eventual required data, all by acting upon the keyboard (TCO) of the device (DCO);
j) in a way analogous to the preceding stages, the device (DCO) sends to the device (DTEL), through a radio frequency transceiver (RFCO), the selections and data input by the user;
k) the device (DTEL), after receiving the data from the device (DCO), through the radio frequency receiver (RFETL), retransmits them to the Service Center by encoder (CDTEL) and interface (TUTEL);
l) the Service Center, after receiving the data from apparatus (1), gives a proper acknowledgment of them through a further transmission on a telephone line and registers the user's selections/data in its own data base, so carrying out the generic "Added Value Service";
m) the acknowledgment of the taking place of the activation of the generic Added Value Service is so received by the device (DTEL) and sent therefrom, on a radio frequency channel, on a radio frequency channel, on the device (DTV) that provides for displaying it on the television set;
n) the user turns off the device (DCO), by switch (ICO) ;
o) the user, by acting upon the remote controller if his/her own television set, switches the displaying on the normal television channels;
p) the generic Added Value Service so has been activated-selected and the user has taken advantage of it immediately, in case for instance of share stock marketing services, or he/she will take advantage at the arrival of the material purchased through apparatus (1) in the case of goods, products, physical services.

21. An apparatus (1) as in the preceding claims characterized in that all information exchanged between the three operating units or devices (DTEL, DTV, DCO) and the Service Center are of an encoded and enciphered type to obviate eventual problems of intrusions/decodings and unproper use of the apparatus itself.
